# NOUVEAU FASCICULE DE BREVET EUROPEEN

(11) **EP 2 670 547 B2**
(45) Date de publication et mention de la décision concernant l'opposition: **08.08.2018**
(45) Mention de la délivrance du brevet: 03.12.2014
(21) Numéro de dépôt: 12706654.6
(22) Date de dépôt: 30.01.2012
(51) Int. Cl.: B22F 3/105, B29C 67/00, B23K 26/34

(54) **DISPOSITIF DE FRITTAGE ET FUSION PAR LASER COMPRENANT UN MOYEN DE CHAUFFAGE DE LA POUDRE PAR INDUCTION**
SINTER- UND LASERFUSIONSVORRICHTUNG MIT EINER VORRICHTUNG ZUM ERWÄRMEN VON PULVER DURCH INDUKTION
SINTERING AND LASER FUSION DEVICE, COMPRISING A MEANS FOR HEATING POWDER BY INDUCTION

(30) Priorité: 01.02.2011 FR 1150795
(43) Date de publication de la demande: 11.12.2013
(73) Titulaire: Safran Aircraft Engines, 75015 Paris (FR)
(72) Inventeur: FLESCH, Thierry, F-77310 Pringy (FR); MOTTIN, Jean-Baptiste, F-86000 Poitiers (FR)
(74) Mandataire: Gevers & Orès
(86) Numéro de dépôt international: PCT/FR2012/050196
(87) Numéro de publication internationale: WO 2012/104536

(56) Documents cités:
- WO-A1-95/06540
- CN-A- 101 070 595
- CN-C- 100 503 130
- CN-Y- 201 168 782
- US-A1- 2004 056 022

## Description

Le domaine de la présente invention est celui de la fabrication des pièces métalliques et plus particulièrement celui de la fabrication de ces pièces par la technique de la fusion laser sélective sur lit de poudre. Il couvre également le cas de la réparation ou de la reconstruction de pièces par rechargement de matière.

La technique de fabrication de pièces par frittage suivi d'une fusion par laser ou par un faisceau d'électrons est déjà connue et largement utilisée lorsqu'il s'agit de réaliser une pièce de prototypage rapide, c'est-à-dire de réaliser une pièce de forme complexe en peu de temps et en petite quantité. Le frittage est un procédé qui permet de réaliser des pièces mécaniques ou d'autres objets à partir de poudres plus ou moins fines. Dans un premier temps, ces poudres sont agglomérées par divers procédés pour constituer une préforme, laquelle est ensuite chauffée pour acquérir une certaine cohésion. Une des techniques de chauffage couramment utilisées pour la réalisation de pièces métalliques par frittage est celle dite de la fusion laser. Dans ce procédé le matériau est présenté sous la forme d'une poudre que l'on fait fondre sous l'action d'un laser de forte puissance (de 200W à quelques kW). La répétition d'un apport de poudre et de la fusion de celle-ci par le laser permet de faire épaissir progressivement la pièce et, par le choix d'un schéma approprié de balayage par le laser, d'obtenir les formes souhaitées.

La méthode utilisée pour la fabrication de ces pièces, lorsqu'elles sont réalisées en alliage de titane, de nickel ou base cobalt comme c'est le cas pour les pièces aéronautiques, génère des contraintes résiduelles importantes qui sont dues aux gradients thermiques générés par la fusion successives des couches. Ces gradients peuvent augmenter en fonction de la géométrie, de l'épaisseur, et des changements de sections des pièces à produire. Et en fonction des matériaux, les contraintes résiduelles issues de ces gradients peuvent générer des déformations de la pièce durant la construction, et des fissurations ou des criques en utilisation.

Il importe donc de contrôler la température au cours du processus de fusion et de maintenir une température homogène dans la poudre afin de minimiser les contraintes résiduelles lors de la solidification.

Pour maîtriser ces gradients thermiques, différentes solutions existent, comme l'utilisation de plateaux chauffants, le chauffage des poudres par convection ou encore le préchauffage de la poudre en utilisant un faisceau haute énergie. Toutefois ces méthodes présentent plusieurs inconvénients. Le plateau chauffant se caractérise par un chauffage qui est localisé uniquement sur le plateau qui porte la poudre, une température de préchauffage limitée et un chauffage non homogène dans l'épaisseur du bac de fabrication ; le chauffage des poudres par convection est, quant à lui, localisé sur la face supérieure du bac de fabrication et n'est pas homogène dans l'épaisseur de la poudre ; enfin le préchauffage par faisceau est, lui aussi, localisé sur la face supérieure du bac de fabrication et n'est pas, non plus, homogène dans l'épaisseur du bac de fabrication.

Dans l'ensemble ces procédés ne permettent un contrôle de la température que très localisé et ne garantissent pas une température homogène dans la pièce en cours de construction.

La présente invention a pour but de remédier à ces inconvénients en proposant un dispositif et une méthode permettant de pallier les inconvénients ci-dessus et donc, de réaliser ou de recharger des pièces par fusion laser sur lit de poudre dont les contraintes résiduelles après solidification soient minimales.

A cet effet, l'invention a pour objet un dispositif pour la réalisation ou le rechargement d'une pièce métallique par frittage et fusion par laser comprenant un générateur de rayon laser, un moyen de déviation dudit rayon pour balayer la surface de la pièce à réaliser, un bac de frittage contenant une poudre métallique destinée à couvrir la surface de la pièce et à être fondue par le rayon laser pour épaissir ladite pièce, caractérisé en ce que le bac de frittage a la forme d'un cylindre dont les parois latérales portent une pluralité de moyens de chauffage par induction, de la poudre contenue dans une zone dudit bac de frittage, les parois étant réalisées en un matériau non susceptible de s'échauffer par induction.

Le chauffage par induction permet de contrôler la température de la pièce et celui de la poudre qui l'environne et donc de piloter les gradients de températures au sein de la pièce.

De façon encore plus avantageuse le cylindre du bac de frittage comporte un fond mobile verticalement (le fond étant défini comme une surface coupant l'ensemble des génératrices du cylindre), les parois latérales étant entourées d'une pluralité de couches de moyens de chauffage, lesdites couches s'étageant sur toute la hauteur de débattement du fond mobile, et étant, chacune, constituée par une pluralité de moyens de chauffage par induction positionnés à la même distance dudit fond mobile.

Par ces moyens de chauffage multiples il est possible de réguler la température à la valeur que l'on souhaite, en chaque zone de l'amas de poudre contenu dans le bac de frittage.

De façon préférentielle le bac de frittage comporte un fond destiné à recevoir la pièce à réaliser, ledit fond étant muni d'un moyen de chauffage et de régulation de sa température. On évite ainsi les éventuels phénomènes de pompage thermique au voisinage du fond.

Dans un mode particulier de réalisation le dispositif comprend en outre au moins un moyen de mesure de la température de la poudre en un point situé au sein du bac de frittage.

Préférentiellement le bac de frittage porte une cane de mesure équipée d'au moins un thermocouple, ladite cane s'étendant de façon à traverser, au moins partiellement, l'amas de poudre contenu dans ledit bac.

Avantageusement le dispositif comprend en outre un moyen de régulation de la température d'un moins un point de l'amas de poudre par l'intermédiaire d'au moins un moyen de chauffage, ledit moyen de chauffage étant piloté en fonction de la valeur fournie par ledit moyen de mesure de la température de la poudre.

L'invention porte aussi sur un procédé de réalisation ou de rechargement d'une pièce métallique par frittage et fusion par laser, ladite pièce étant placée dans un bac de frittage contenant une poudre métallique destinée à être fondue par un rayon laser pour épaissir ladite pièce, le procédé comportant une étape de recouvrement de la pièce par une épaisseur de poudre sur sa surface à épaissir, une étape de fusion de la poudre par un balayage par ledit rayon laser, une étape de solidification par refroidissement de la matière fondue, caractérisé en ce qu'il comprend en outre une étape de chauffage par induction de la poudre contenue dans une zone dudit bac de frittage, l'étape de chauffage étant réalisée par une pluralité de moyens de chauffage par induction dans les parois du bac de frittage ayant une forme de cylindre, les parois étant réalisées en un matériau non susceptible de s'échauffer par induction.

Dans un mode particulier de réalisation le chauffage par induction intervient préalablement à la fusion par laser.

Dans un autre mode de réalisation le chauffage par induction intervient postérieurement à la fusion par laser, de façon à réguler la température de la poudre contenue dans le bac de frittage, au cours de la phase de solidification de la partie liquide de la pièce.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue schématique d'une machine de frittage par fusion laser,
- la figure 2 est une vue schématique, en coupe verticale, d'une machine de frittage par fusion laser, selon un mode de réalisation de l'invention, et
- la figure 3 est une vue de dessus de la machine de la figure 2.

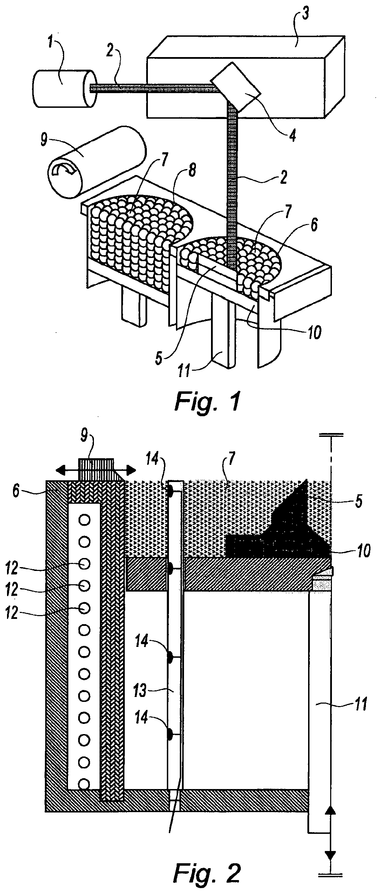

En se référant à la figure 1, on voit une machine pour la réalisation d'une pièce métallique par frittage et fusion laser.

Un générateur 1 de faisceau laser émet un rayon laser 2 qu'il dirige sur un ensemble de miroirs réfléchissants 3, dont le dernier miroir 4 est pivotant de façon à assurer un balayage de la surface de la pièce à réaliser 5. Il convient de noter que le transport du faisceau laser n'est pas forcément assuré par des miroirs, une fibre optique pouvant être utilisée, en fonction de la longueur d'onde du laser utilisé, et le balayage du faisceau laser pouvant être réalisé par d'autres moyens, comme des lentilles F-Theta.

La pièce 5 est posée sur un plateau de fabrication 10 situé en vis-à-vis du faisceau laser 2 ; elle est par ailleurs plongée dans un bac 6 de façon à pouvoir être régulièrement recouverte d'une couche de la poudre métallique 7 adaptée au frittage. Un second bac 8, d'alimentation en poudre, est positionné à côté du bac de frittage 6 et est rempli de cette poudre de frittage 7. Un dispositif du type piston 9 permet de déplacer une quantité de poudre 7, du bac d'alimentation 8 vers le bac de frittage 6, pour recouvrir la pièce 5 d'une couche de poudre d'épaisseur donnée. L'épaisseur de cette couche correspond à celle dont peut être augmentée celle de la pièce au cours d'une passe de fusion par le rayon laser 2, aux facteurs de compaction et de retrait de solidification près. Des dispositifs de descente du bac de frittage 6 et de montée du bac d'alimentation 8 permettent, d'une part, de conserver la pièce à fritter 5 au niveau de l'affleurement des parois du bac 6, et d'autre part, d'amener une couche de poudre métallique 7 ayant la bonne épaisseur, en face du piston 9 du bac d'alimentation 8.

Le frittage de la pièce 5 et la fusion de la poudre par le laser s'effectuent par une succession d'opérations élémentaires se déroulant de la façon suivante : la pièce 5 affleurant le haut des parois du bac de frittage 6, le piston 9 est déplacé en direction de ce bac 6 pour qu'il dépose l'épaisseur souhaitée de poudre 7 sur la pièce 5 puis il est remis en position d'attente à l'extrémité du bac d'alimentation 8. Le faisceau laser 2 effectue un balayage de la surface de la pièce à l'aide du miroir oscillant 4, ce qui provoque la fusion de la couche de poudre métallique et son agrégation à la pièce 5, et ce qui accroît l'épaisseur de celle-ci en conséquence. La pièce 5 est ensuite tirée vers le bas pour compenser l'augmentation de son épaisseur et pour que sa surface revienne à l'affleurement du bac de frittage 6, tandis que le bac d'alimentation 8 est soulevé pour remettre une quantité adéquate de poudre métallique 7 en face du piston 9. Ce processus est répété le nombre de fois qu'il est nécessaire pour aboutir à la géométrie et aux cotes souhaitées pour la pièce 5.

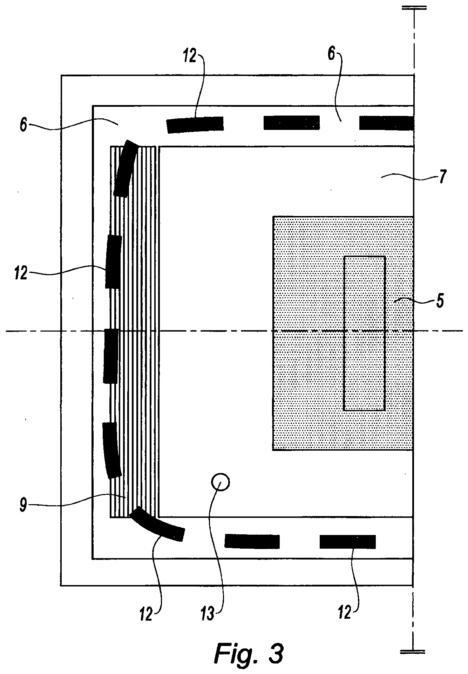

En se référant maintenant aux figures 2 et 3, on voit un dispositif permettant la réalisation de pièces par frittage et fusion par laser selon l'invention.

La pièce à réaliser 5 est posée sur le plateau de fabrication 10 qui est mobile verticalement sous l'action d'un piston de descente 11, et recouverte d'une poudre de frittage 7 amenée par un piston d'alimentation 9, en provenance d'un bac d'alimentation (non représenté). Ici le bac de frittage 6 est représenté sous une forme cubique, sans que cette forme soit impérative. A l'intérieur des parois de ce bac de frittage sont noyées tout une série d'inducteurs 12 qui sont reliés à une alimentation électrique, non représentée, et dont le but est de donner à l'amas de poudre la température désirée. Horizontalement, ces inducteurs sont disposés régulièrement sur la périphérie du bac de frittage 6 de façon à donner à l'amas de poudre une température la plus homogène possible ; verticalement, plusieurs série d'inducteurs sont empilées les unes au dessus des autres de façon à assurer le chauffage de la poudre quelle que soit la taille obtenue par la pièce 5, c'est-à-dire quelle que soit la position prise par le plateau de fabrication 10 dans le plan vertical. Les séries d'inducteurs s'étendent ainsi jusqu'à la partie inférieure des parois verticales du bac de frittage 6.

Au milieu du bac de frittage, à une distance des parois du bac de frittage et de la pièce à fabriquer qui est compatible avec les opérations à réaliser, on trouve une canne de contrôle 13 qui traverse le plateau de fabrication 10 et qui s'étend verticalement sur toute la hauteur du bac de frittage. Le plateau de fabrication 10 est ainsi percé d'un trou qui lui permet de se déplacer verticalement en fonction de la progression de l'épaississement de la pièce 5, sans interférer avec la canne de contrôle 13. Cette cane porte une pluralité de moyens de mesure de la température de la poudre, comme par exemple des thermocouples, qui sont disposés régulièrement sur sa hauteur. Ils ont vocation à mesurer la température de la poudre 7 lorsque la position du plateau 10 est telle que ces thermocouples 14 sont au dessus dudit plateau et qu'ils sont ainsi au contact de la poudre 7.

On va maintenant décrire le fonctionnement du dispositif selon l'invention pour la réalisation d'une pièce par frittage et fusion laser. La réparation d'une pièce par rechargement de matière s'effectue de façon analogue.

La réalisation de la pièce se déroule sensiblement de la même façon qu'avec un dispositif classique, c'est-à-dire que de la poudre, prélevée dans le bac d'alimentation 8 est apportée par le piston d'alimentation 9 au dessus de la pièce 5 dont on veut augmenter l'épaisseur. Un rayon laser 2 est envoyé sur cette poudre selon un schéma de balayage qui décrit la surface à épaissir et qui fait fondre localement la poudre, de façon à l'agglomérer à la pièce existante.

L'invention s'en distingue toutefois en ce que le dispositif est complété par une série d'inducteurs 12 dont la fonction est de réguler la température de la poudre 7 au cours de la phase de solidification du métal fondu et de son agglomération à la pièce existante.

Ces inducteurs, qui équipent le pourtour du plateau de fabrication et enveloppent l'article en cours de fabrication, constituent un système chauffant pour la poudre du fait de la constitution métallique de celle-ci. Ils sont séparés de la poudre 7 par l'intermédiaire des parois du bac de frittage 6, qui sont réalisées dans un matériau permettant le chauffage par induction de la poudre mais qui ne s'échauffent quasiment pas sous l'effet des courants induits.

Ce système chauffant est piloté par un système de régulation de la température de la poudre dans ses différentes zones à partir des informations de température mesurées par la canne de contrôle 13 et ses thermocouples 14. Ces mesures de températures permettent de piloter le chauffage des inducteurs 12 afin de réguler la température de la pièce 5 en construction et de la poudre 7 qui l'environne. Compte tenu du nombre importants d'inducteurs présents autour du bac de frittage 6 la régulation de la température de la poudre peut être réalisée par zone, ce qui donne un meilleur contrôle du refroidissement et de la solidification, en prenant en compte certains paramètres particuliers comme, par exemple, l'épaisseur de matière déjà agglomérée en chaque point de la pièce et donc ses caractéristiques locales en termes de conduction et de convexion.

Un programme de pilotage du réchauffement par induction, dont la mise au point est à la portée d'un homme du métier, définit l'intensité électrique qui doit traverser chaque inducteur pour obtenir la température recherchée en chaque point du bac de poudre. Au besoin une phase de mise au point de ce programme peut être réalisée en effectuant un étalonnage sur une pièce de référence, pour chacun des types d'alliage dans lequel la réalisation d'une pièce est envisagée.

L'invention permet ainsi, en effectuant des mesures à différentes hauteurs à l'aide des thermocouples 14 de la canne 13 de s'assurer de la bonne température de la poudre en tout point du bac de fabrication, et donc de garantir le refroidissement correct de la pièce 5 au cours de sa réalisation.

Le dispositif peut être complété par un système de chauffage du plateau de mise au point de la régulation du système pour éviter des phénomènes de pompage thermique qui pourraient apparaître du fait de la présence en fond du bac 6 d'un plateau de fabrication froid. Le chauffage de ce plateau peut être réalisé par tout moyen classique, tel par exemple qu'un ensemble de cannes chauffantes qui le traversent dans son épaisseur.

Dans un mode particulier de réalisation la position de la cane de contrôle 13 peut ne pas être fixe mais être adaptable en fonction de la pièce à produire et de la forme de celle-ci. A cet effet, plusieurs emplacements possibles sont prévus pour l'orifice par lequel la cane 13 traverse le plateau de fabrication 10. On peut ainsi affiner les mesures thermiques réalisées et optimiser le réchauffement en chaque point de la poudre 7.

## Revendications

1. Dispositif pour la réalisation ou le rechargement d'une pièce métallique par frittage et fusion par laser comprenant un générateur (1) de rayon laser (2), un moyen de déviation (4) dudit rayon pour balayer la surface de la pièce à réaliser (5), un bac de frittage (6) contenant une poudre métallique (7) destinée à couvrir la surface de la pièce (5) et à être fondue par le rayon laser (2) pour épaissir ladite pièce,
**caractérisé en ce que** le bac de frittage a la forme d'un cylindre dont les parois latérales portent une pluralité de moyens de chauffage (12) par induction de la poudre contenue dans une zone dudit bac de frittage, les parois étant réalisées en un matériau non susceptible de s'échauffer par induction.

2. Dispositif selon la revendication 1 dans lequel le cylindre du bac de frittage (6) comporte un fond mobile verticalement (10), les parois latérales étant entourées d'une pluralité de couches de moyens de chauffage, lesdites couches s'étageant sur toute la hauteur de débattement du fond mobile, et étant, chacune, constituée par une pluralité de moyens de chauffage par induction (12) positionnés à la même distance dudit fond mobile.

3. Dispositif selon l'une des revendications 1 à 2 dans lequel le bac de frittage (6) comporte un fond (10) destiné à recevoir la pièce à réaliser, ledit fond étant muni d'un moyen de chauffage et de régulation de sa température.

4. Dispositif selon l'une des revendications 1 à 3 comprenant en outre au moins un moyen de mesure (14) de la température de la poudre (7) en un point situé au sein du bac de frittage (6).

5. Dispositif selon la revendication 4 dans lequel le bac de frittage (6) porte une cane de mesure (13) équipée d'au moins un thermocouple (14), ladite cane s'étendant de façon à traverser, au moins partiellement, l'amas de poudre (7) contenu dans ledit bac (6).

6. Dispositif selon l'une des revendications 4 ou 5 comprenant en outre un moyen de régulation de la température d'un moins un point de l'amas de poudre (7) par l'intermédiaire d'au moins un moyen de chauffage (12), ledit moyen de chauffage étant piloté en fonction de la valeur fournie par ledit moyen de mesure de la température de la de poudre (14).

7. Procédé de réalisation ou de rechargement d'une pièce métallique par frittage et fusion par laser, ladite pièce étant placée dans un bac de frittage (6) contenant une poudre métallique (7) destinée à être fondue par un rayon laser (2) pour épaissir ladite pièce (5), le procédé comportant une étape de recouvrement de la pièce par une épaisseur de poudre sur sa surface à épaissir, une étape de fusion de la poudre par un balayage par ledit rayon laser, une étape de solidification par refroidissement de la matière fondue, **caractérisé en ce qu'**il comprend en outre une étape de chauffage par induction de la poudre contenue dans une zone dudit bac de frittage, l'étape de chauffage étant réalisée par une pluralité de moyens de chauffage par induction (12) dans les parois du bac de frittage ayant une forme de cylindre, les parois étant réalisées en un matériau non susceptible de s'échauffer par induction.

8. Procédé selon la revendication 7 dans lequel le chauffage par induction intervient préalablement à la fusion par laser.

9. Procédé selon l'une des revendications 7 ou 8 dans lequel le chauffage par induction intervient postérieurement à la fusion par laser, de façon à réguler la température de la poudre (7) contenue dans le bac de frittage, au cours de la phase de solidification de la partie liquide de la pièce (5).

## Patentansprüche

1. Vorrichtung zum Herstellen oder Ergänzen eines metallischen Teils durch Sintern oder Schmelzen mit Laser, umfassend einen Generator (1) eines Laserstrahls (2), ein Ablenkmittel (4) des Strahls, um die Oberfläche des herzustellenden Teils (5) abzutasten, einen Sinterbehälter (6), der ein Metallpulver (7) enthält, das dazu bestimmt ist, die Oberfläche des Teils (5) zu bedecken und durch den Laserstrahl (2) geschmolzen zu werden, um den Teil zu verdicken,
**dadurch gekennzeichnet, dass** der Sinterbehälter ferner Wände umfasst, die mindestens ein Induktionsheizmittel (12) für das in einer Zone des Sinterbehälters enthaltene Pulver umfassen, wobei die Wände aus einem Material hergestellt sind, das nicht geeignet ist, sich durch Induktion zu erhitzen.

2. Vorrichtung nach Anspruch 1, bei der der Zylinder des Sinterbehälters (6) einen vertikal beweglichen Boden (10) umfasst, wobei die Seitenwände von einer Vielzahl von Heizmittelschichten umgeben sind, wobei die Schichten auf der gesamten Ausschlaghöhe des beweglichen Bodens in Stufen angeordnet und jeweils von einer Vielzahl von Induktionsheizmitteln (12) gebildet sind, die im selben Abstand zum beweglichen Boden angeordnet sind.

3. Vorrichtung nach einem der Ansprüche 1 bis 2, bei der der Sinterbehälter (6) einen Boden (10) umfasst, der dazu bestimmt ist, den herzustellenden Teil aufzunehmen, wobei der Boden mit einer Vielzahl von Mitteln zur Heizung und Regulierung seiner Temperatur versehen ist.

4. Vorrichtung nach einem der Ansprüche 1 bis 3, ferner umfassend mindestens ein Mittel (14) zum Messen der Temperatur des Pulvers (7) an einem im Inneren des Sinterbehälters (6) befindlichen Punkt.

5. Vorrichtung nach Anspruch 4, bei der der Sinterbehälter (6) einen Messstock (13) trägt, der mit mindestens einem Thermoelement (14) ausgestattet ist, wobei sich der Stock derart erstreckt, dass er zumindest teilweise durch die in dem Behälter (6) enthaltene Anhäufung von Pulver (7) hindurchgeht.

6. Vorrichtung nach einem der Ansprüche 4 oder 5, ferner umfassend ein Mittel zur Regulierung der Temperatur mindestens eines Punktes der Pulveranhäufung (7) mit Hilfe mindestens eines Heizmittels (12), wobei das Heizmittel in Abhängigkeit von dem Wert gesteuert wird, der von dem Mittel zum Messen der Temperatur des Pulvers (14) geliefert wird.

7. Verfahren zum Herstellen oder Ergänzen eines metallischen Teils durch Sintern oder Schmelzen mit Laser, wobei der Teil in einem Sinterbehälter (6) angeordnet ist, der ein Metallpulver (7) enthält, das dazu bestimmt ist, durch einen Laserstrahl (2) geschmolzen zu werden, um den Teil (5) zu verdicken, wobei das Verfahren einen Schritt des Bedeckens des Teils mit einer Pulverschicht auf seiner zu verdickenden Fläche, einen Schritt des Schmelzens des Pulvers durch ein Abtasten mit dem Laserstrahl, einen Schritt der Verfestigung durch Abkühlen des geschmolzenen Materials umfasst, **dadurch gekennzeichnet, dass** es ferner einen Schritt des Erhitzens des in einer Zone des Sinterbehälters enthaltenen Pulvers durch Induktion umfasst, wobei der Schritt des Erhitzens durch ein Induktionsheizmittel (12) in den Wänden des Sinterbehälters durchgeführt wird, wobei die Wände aus einem Material hergestellt sind, das nicht geeignet ist, sich durch Induktion zu erhitzen.

8. Verfahren nach Anspruch 7, bei dem das Erhitzen durch Induktion vor dem Schmelzen mit Laser erfolgt.

9. Verfahren nach einem der Ansprüche 7 oder 8, bei dem das Erhitzen durch Induktion nach dem Schmelzen mit Laser erfolgt, um die Temperatur des in dem Sinterbehälter enthaltenen Pulvers (7), während der Verfestigungsphase des flüssigen Teils des Teils (5) zu regulieren.

## Claims

1. A device for producing or building up a metal part by laser sintering and melting, comprising a generator (1) for generating a laser beam (2), a means (4) for deviating said beam in order to sweep it over the surface of the part (5) to be produced, and a sintering tray (6) containing a metal powder (7) intended to cover the surface of the part (5) and to be melted by the laser beam (2) in order to increase the thickness of said part,
**characterized in that** the sintering tray furthermore comprises walls comprising at least one inductive heating means (12) for heating the powder contained in a zone of said sintering tray, said walls being made of a material that is not susceptible to inductive heating.

2. The device as claimed in claim 1, in which the cylinder-shaped sintering tray (6) comprises a vertically movable base (10), the sidewalls being encircled by a number of layers of heating means, said layers being tiered over the entire length of travel of the movable base, each layer consisting of a number of inductive heating means (12) positioned at the same distance from said movable base.

3. The device as claimed in one of claims 1 to 2, in which the sintering tray (6) comprises a base (10) intended to receive the part to be produced, said base being equipped with a means for heating regulating its temperature.

4. The device as claimed in one of claims 1 to 3, furthermore comprising at least one means (14) for measuring the temperature of the powder (7) at a point located within the sintering tray (6).

5. The device as claimed in claim 4, in which the sintering tray (6) holds a measuring rod (13) equipped with at least one thermocouple (14), said rod extending in order to pass at least partway through the powder bed (7) contained in said tray (6).

6. The device as claimed in either of claims 4 and 5, furthermore comprising a means of regulating the temperature of at least one point in the powder bed (7) by way of at least one heating means (12), said heating means being controlled depending on the value delivered by said means for measuring the temperature of the powder (14).

7. A process for producing or building up a metal part by laser sintering and melting, said part being placed in a sintering tray (6) containing a metal powder (7) intended to be melted by a laser beam (2) in order to increase the thickness of said part (5), the process comprising a step of covering that surface of the part the thickness of which is to be increased with a thickness of powder, a step of melting the powder by sweeping said laser beam over it, and a step in which the molten material is solidified by cooling, **characterized in that** it furthermore comprises a step of inductive heating of the powder contained in a zone of said sintering tray, the step of heating being realized by induction means (12) in walls of the sintering, said walls being made of a material that is not susceptible to inductive heating.

8. The process as claimed in claim 7, in which the inductive heating is carried out before the laser melting.

9. The process as claimed in either of claims 7 and 8, in which the inductive heating is carried out after the laser melting in order to regulate the temperature of the powder (7) contained in the sintering tray during the phase in which the liquid portion of the part (5) solidifies.
